Europäisches Patentamt

European Patent Office

Office européen des brevets

(19)

(11) **EP 0 767 055 B1**

(12) **EUROPÄISCHE PATENTSCHRIFT**

(45) Veröffentlichungstag und Bekanntmachung des Hinweises auf die Patenterteilung:
**03.02.1999 Patentblatt 1999/05**

(51) Int. Cl.$^6$: **B41F 13/004**, B41F 33/00, B41F 13/00, G01L 5/10

(21) Anmeldenummer: **96113723.9**

(22) Anmeldetag: **28.08.1996**

(54) **Überwachungseinrichtung für den Antrieb einer Druckmaschine**

Monitoring device for the driving device of a printing machine

Dispositif de surveillance pour l'entraînement d'une machine à imprimer

(84) Benannte Vertragsstaaten:
**AT DE FR GB IT NL**

(30) Priorität: **04.10.1995 DE 19536918**

(43) Veröffentlichungstag der Anmeldung:
**09.04.1997 Patentblatt 1997/15**

(73) Patentinhaber:
**MAN Roland Druckmaschinen AG**
**63075 Offenbach (DE)**

(72) Erfinder:
• **Wiese, Holger, Dr.**
**63179 Obertshausen (DE)**

• **Schmitt-Kallenbach, Martin**
**63165 Mühlheim (DE)**

(74) Vertreter: **Stahl, Dietmar**
**MAN Roland Druckmaschinen AG,**
**Abteilung FTB/S,**
**Postfach 101264**
**63012 Offenbach (DE)**

(56) Entgegenhaltungen:
EP-A- 0 086 433          EP-A- 0 187 247
EP-A- 0 337 100          DE-A- 3 614 979
DE-A- 3 724 785

**Beschreibung**

Die Erfindung betrifft eine Überwachungseinrichtung für den Antrieb einer Druckmaschine gemäß dem Oberbegriff von Anspruch 1.

Antriebe von Bogenoffsetdruckmaschinen der heute weit verbreiteten Art sind als Gleichstromantriebe mit netzgeführten Stromrichtern ausgebildet (4-Quadranten-Antrieb). Häufig wird dabei die Leistung eines derartigen Elektromotors mit nachgeschalteter elekrtromagnetisch betätigbarer Bremse über einen Keilriementrieb in den mechanischen Getriebezug (mit oder ohne Längswelle) eingespeist. Der Vorteil der Verwendung von Gleichstrommotoren mit netzgeführten Gleichrichtern liegt darin, daß sämtliche Bewegungsvorgange rein elektrisch ausführbar sind. Als Beispiel sei hier das Bremsen genannt, welches auf ein Not-Aus-Kommando erfolgt. Ferner ermöglicht ein Gleichstromantrieb mit Stomrichter den Betrieb der Druckmaschine in einem weiten Drehzahl- und Drehmomentbereich.

Gerade aus Gründen der Personensicherheit sind in letzter Zeit eine Reihe von Sicherheitssystemen entwickelt worden, vermittels denen eine Überwachung der Maschinenantriebe erfolgt. Überwacht wird insbesondere die Reaktion des Antriebes auf die Abgabe eines Brems-Kommandos wie z.B. Not-Aus.

Aus der DE 3 614 979 C2 ist eine Überwachungseinrichtung für den Antrieb einer Druckmaschine bekannt, wobei hier als Bewegungsgröße des Antriebs der Druckmaschine die Ist-Drehzahl des Motors verwendet wird. Neben dem Soll-Ist-Vergleich der Drehzahlregelung dieses Antriebes wird die Ist-Drehzahl durch einen separaten Schaltkreis zusätzlich erfaßt, um insbesondere in Notsituationen das korrekte Ausführen eines elektrischen Bremsvorganges zu überwachen. Liegt eine unzulässige Abweichung der erfaßten Bewegungsgröße des Antriebes vor, so wird die elektrisch betätigbare Bremse des Antriebes eingelegt.

Nachteilig bei einem derartigen Sicherheitssystem ist, daß ausschließlich der Antriebsmotor (Gleichstrommotor) nebst den zugeordneten elektrischen Hauptantriebsteilen einer Überwachung unterzogen ist. Die Reaktion der Druckmaschine selbst aufbeispielsweise einen elektrisch eingeleiteten Bremsvorgang bleibt dabei außen vor. Wird die Leistung des Hauptantriebsmotors über einen Keilriementrieb in den Getriebezug der Druckmaschine eingespeist, so kommt es insbesondere durch falsche Riemenspannung bzw. durch Schmierstoffverschmutzungen zu einem übermäßigen Schlupf in dem Riementrieb, so daß die Druckmaschine aufgrund des Trägheitsmomentes ihrer drehenden Teile dem vom Hauptantrieb eingeleiteten Bremsvorgang nicht folgt. Schlupf im Keilriementrieb während des Normalbetriebs der Druckmaschine führt zudem zu einer übermäßigen Beanspruchung und somit Abnutzung dieses Systems. Das Wechseln der Keilriemen bedingt ferner Produktionsausfall durch Stillstand der Druckmaschine.

Aus der EP 0 187 247 B1 ist ein Verfahren sowie Einrichtung zur Bremsenkontrolle eines bewegungsüberwachten und gesteuerten Antriebsmotors einer Druckmaschine bekannt. Hier wird jeweils bei geöffneter und geschlossener Motorbremse der Antriebsmotor auf ein Anlaufen hin überwacht. Wird durch die Überwachungseinrichtung eine Bewegung des Motors bei geschlossener Bremse und Maschinenstillstand festgestellt, so ist dies ein Indiz für eine nicht korrekte Bremsenfunktion und es erfolgt die Abgabe eines Fehlersignals. Durch dieses Sicherheitssystem lassen sich aber durch Schlupf in einem Keilriementrieb verursachte Fehlfunktionen, welche gerade in Not-Aus-Situationen zu einer Personengefährdung führen können, nicht feststellen bzw. vermeiden.

Bei Druckmaschinen mit einem Keilriementrieb zwischen Antriebsmotor und Getriebezug und/oder Hauptantriebswelle muß eine vorgegebene Riemenspannung eingestellt werden. Eine zu gering eingestellte Riemenspannung hat neben einer erhöhten Abnutzung der Riemen eine erhöhte Erwärmung der Bauteile in der Umgebung des Kiementriebes zur Folge, was sich unter Umständen negativ auf deren Lebensdauer auswirkt. Eine zu geringe Riemenspannung hat dabei ferner noch den Nachteil, daß insbesondere die aus Gründen des Personenschutzes vom Hauptantrieb in kürzester Zeit auszuführenden Bremsvorgänge (Not-Aus-Kommando) ebenfalls unter Wirkung eines Schlupfes nicht korrekt auf die Druckmaschine übertragen werden. Aufgrund des Trägheitsmomentes der bewegten Teile der Druckmaschine läuft diese somit ein bestimmtes Stück nach, obwohl der Hauptantrieb bereits stillgesetzt worden ist. Dies führt dazu, daß vorgegebene Anhaltwege nicht eingehalten werden.

Die Erfassung einer Bewegungsgröße der Druckmaschine bzw. deren bewegter Teile über einen Winkelgeber (Inkremental- oder Absolutwinkelgeber) dient der Auslösung von winkelabhängig auszuführenden Schaltvorgängen. Wie aus der DE 3 836 310 A1 bekannt, sind hier insbesondere Schaltvorgänge von Trockner- bzw. Pudergeräten sowie der Umstellvorgang von Schöndruck auf Schön- und Widerdruck und umgekehrt zu nennen. Auch das Druckan-/Druckabschalten der Druckwerkszylinder sowie das Schalten der das Bogenfreigeben bzw. Sperren bewirkenden Organe an der Anlage der Druckmaschine zählen zu solchen winkelabhängig auszulösenden Funktionen. Die Auswertung der Signalen eines Inkrementalgebers bzw. eines Absolutwinkelgebers (entweder Differentation des Signals bzw. Verwendung der Impulse der niederwertigen Bitfolge) ermöglicht es insbesondere, bestimmte winkelabhängig auszuführende Schaltfunktionen auch geschwindigkeitsabhängig vorzusteuern. Dadurch sind Totzeiten entsprechender Stellglieder kompensierbar.

Aus der DE-A 37 24 785 ist ein Verfahren zum Einstellen von Schaltkupplungen in Verarbeitungsmaschinen bekannt. Hierbei werden die Ist-Drehzahlen der durch eine Kupplung verbundenen Antriebswelle und Abtriebswelle erfaßt und in einem Vergleicher ausgewertet. Bei zu großen Abweichungen vom vorgegebenen Sollwert wird ein Alarmsignal abgegeben bzw. entsprechende Signale in einer automatischen Nachstelleinrichtung für die Kupplung generiert.

Aus der EP-A 0 337 100 ist ein Verfahren und eine Anordnung zur Messung von Drehzahlen bekannt. Hierbei wird der Wechselanteil des Feldstromes eines Gleichstrom-Nebenschlußmotors einer Frequenzanalyse unterworfen.

Aus der DE-A 36 14 979 ist ein Sicherheitssystem für eine Druckmaschine bekannt, wobei dem Antrieb der Druckmaschine eine Überwachungsschaltung zugeordnet ist. Im Normalfall erfolgt das Bremsen des Antriebes rein elektrisch durch entsprechendes Bestromen der Motorwicklung. Bei zu großen Abweichungen des Drehzahl-Zeitverhaltens wird die dem Antriebsmotor zugeordnete mechanische Bremse eingelegt.

Aus der EP-A 0 187 247 ist ein Verfahren und eine Einrichtung zur Bremsenkontrolle eines bewegungsüberwachten und gesteuerten Antriebsmotors in einer Druckmaschine bekannt. Vor jedem Anlauf wird der Antrieb bei noch geschlossener Motorbremse kurzzeitig mit kleinen Bewegungs-Sollwerten als Prüfvorgabe beaufschlagt und danach dessen Bewegungs-Istwert festgestellt. Reicht das von der Bremse aufgebrachte Moment nicht aus wird eine Fehlermeldung erzeugt sowie der Antriebsmotor abgeschaltet.

Aufgabe der vorliegenden Erfindung ist es somit, eine Überwachungseinrichtung gemäß dem Oberbegriff von Anspruch 1 derartig zu erweitern, so daß sich eine Erhöhung der Funktionssicherheit des Maschinenbetriebes und insbesondere des Personenschutzes ergibt.

Gelöst wird diese Aufgabe durch die kennzeichnenden Merkmale von Anspruch 1. Weiterbildungen der Erfindung ergeben sich aus den Unteransprüchen.

Gemäß einer Ausführungsform der Erfindung ist vorgesehen, daß die Drehzahl des Antriebsmotors der Druckmaschine als Bewegungsgröße erfaßt und mit ebenfalls der Drehzahl als weiterer Bewegungsgröße der Druckmaschine bzw. deren drehenden Teile auf Einhaltung eines vorgegebenen Drehzahlverhältnisses hin überwacht wird. Durch eine derartige Überwachung der Drehzahl des Antriebsmotors einerseits und der von der Druckmaschine ausgeführten Drehzahl andererseits ist unter Berücksichtigung der Über- bzw. Untersetzung der zwischengeschalteten Getriebeglieder der ordnungsgemäße Funktionszustand der zwischengeschalteten Getriebeelemente feststellbar. Insbesondere kann bei einem zwischengeschalteten Keilriementrieb der stets vorhandene Schlupf überwacht und deren zeitliches Verhalten festgehalten werden. Auch ist so feststellbar, ob sich der Schlupf im Keilriementrieb durch Riemenlängung oder Verunreinigungen der Riemenscheiben in unzulässiger Weise vergrößert. Ferner kann das Nachlassen der Riemenspannung, beispielsweise verursacht durch nicht korrekt festgezogene Spannschrauben oder dergl., durch Überwachung des Schlupfes festgestellt werden. Vergrößert sich der Schlupf über ein vorgegebenes Maß hinaus, so erfolgt die Darstellung einer Fehlermeldung am Leitstand der Druckmaschine und es kann ferner die Anweisung ausgegeben werden, eine entsprechende Wartungsmaßnahme durchzuführen. Gleiches gilt bei einer Überwachung einer im Normalzustand keinen Schlupf aufweisenden, reibschlüssig wirkenden Kupplung.

Wie bereits angedeutet kann die erfindungsgemäße Schlupfüberwachung auch bei einer Druckmaschine Verwendung finden, bei welcher zwischen Antrieb und Maschine und/oder Teilen der Maschine reibschlüssig wirkende Kupplungen geschaltet sind. Als Beispiel seien umstellbare sowie mit bedarfsweise zu- oder abschaltbaren Aggregaten ausgerüstete Druckmaschinen genannt. Es erfolgt dann eine - u. U. zusätzliche - Drehzahlerfassung im Aggregat bzw. Maschinenteil hinter der Kupplung.

Durch die erfindungsgemäß vorgesehene Überwachung des Drehzahlverhältnisses der Drehzahl vom Antriebsmotor einerseits und der wenigstens eines der von der Druckmaschine bewegten Teile ist aber auch ein Blockieren der Druckmaschine gegen ein Anlaufen feststellbar. Dies ist eine Situation, die insbesondere während bzw. nach dem Aufstellen einer Druckmaschine auftreten kann, da sich Werkzeug bzw. Montagevorrichtungen noch in der Maschine befinden bzw. mit dieser verbunden sind. In einem derartigen Fall ist dabei ebenfalls vorgesehen, den Antriebsmotor gegen ein Weiterlaufen zu sperren (Stillsetzen des Motors) sowie eine entsprechende Fehlermeldung vorzugsweise in Verbindung mit der Anzeige möglicher Fehlerursachen auszugeben.

Erfindungsgemäß ist vorgesehen, daß neben der reinen Funktionsüberwachung der zwischen Hauptantriebsmotor und Druckmaschine gelegenen Getriebe oder Kupplungen durch Erfassen der Drehzahlwerte des Antriebsmotors einerseits und eines der Druckmaschinenteile andererseits zusätzlich noch das vom Antriebsmotor in die Druckmaschine eingespeiste Drehmoment erfaßt wird. Bei der Ausbildung des Antriebsmotors der Druckmaschine in Form eines Gleichstrommotors kann dies in einfacher Weise durch erfassen des Ankerstromes erfolgen.

Aus dem Verhältnis der Drehzahlen des Antriebsmotors und beispielsweise einer Eintourenwelle der Druckmaschine (z.B. Plattenzylinder) wird der Schlupf wie zuvorstehend beschrieben ermittelt. Da der Ankerstrom eines Gleichstrommotors dem vom Motor aufgebrachten Drehmoment direkt proportional ist, können in einem Kennlinienfeld mögliche bzw. erlaubte (d.h. sich bei ordnungsgemäßen Maschinenlauf ergebende) Werte des Schlupfes dem Motorstrom bzw. dem vom Motor aufgebrachten Drehmoment gegenüber gestellt werden. Durch diese Maßnahme ist es möglich, insbesondere bei großen Motorströmen bzw. vom Antriebsmotor aufgebrachten Drehmomenten größere Schlupfbeträge zuzulassen.

Gemäß einer Weiterbildung der Erfindung ist vorgesehen, wenigstens einmalig oder von Zeit zu Zeit wiederholt ein Selbstlernen der sich bei bestimmten Antriebsmomenten bzw. Motorsströmen ergebenen Werte des Schlupfes im Riementrieb zu erfassen. Dies kann in einfacher Weise dadurch erfolgen, daß nach Aufstellen der Maschine und nach ordnungsgemäßen Einstellen der Riemenspannung bestimmte Drehzahlbereiche (Rampen) durchfahren werden. In Verbindung mit vorgegebenen Toleranzwerten für die Beträge des Schlupfes als Funktion des Motorstromes bzw. des vom Antriebsmotor aufgebrachten Drehmomentes können dann Fehlermeldungen bzw. Wartungshinweise am Leitstand der Druckmaschine angezeigt bzw. ausgegeben werden. Ferner ist auch eine langfristige Protokollierung der erfaßten Größen sowie der evtl. ausgegebenen Fehlermeldungen möglich, was die Behebung von Fehlerursachen erleichtert.

Ferner sei darauf hingewiesen, daß sich durch die erfindungsgemäße Maßnahme nicht nur Schäden bzw. der ordnungsgemäße Betriebszustand des Keilriementriebes ermitteln läßt. Eine Vergrößerung des Schlupfes im Keilriementrieb zwischen Antriebsmotor und Druckmaschine kann seine Ursachen insbesondere auch in einer zunehmenden Schwergängigkeit von Lagern der Druckwerkszylinder usw. haben. Gerade eine Überwachung des Schlupfes in Verbindung mit dem dem Lastmoment proportionalen Ankerstrom des Antriebsmotors ermöglicht somit eine Schadensfrüherkennung.

Des weiteren erfolgt die Erläuterung eines Ausführungsbeispiels der Erfindung anhand der Zeichnungen. Es zeigt:

Fig. 1   der Hauptantrieb einer Druckmaschine mit der erfindungsgemäßen Überwachungseinrichtung, und

Fig. 2   die Darstellung ordnungsgemäßer bzw. zu großer Schlupfwerte im Schlupf-Motorstrom-Keninnienfeld.

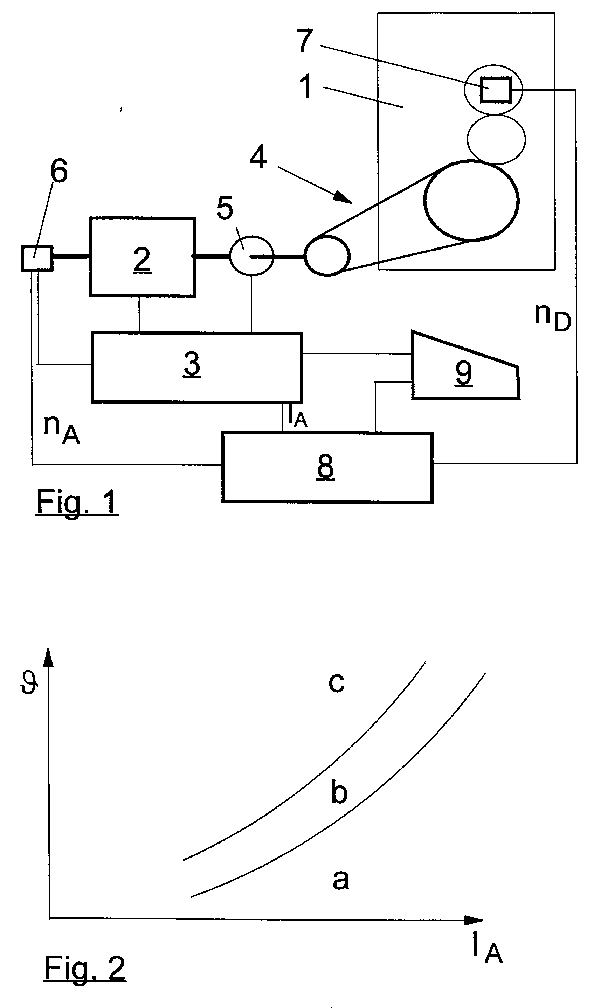

Figur 1 zeigt prinzipiell eine Druckmaschine 1 mit ein oder mehreren Druckwerken. Der Antrieb der Druckmaschine 1 erfolgt über einen als Gleichstrommotor ausgebildeten Antriebsmotor 2 über einen Keilriementrieb 4. Der Abtrieb des Keilriementriebes 4 ist dabei über einen nicht dargestellten Getriebezug mit den drehbaren Teilen der Druckmaschine 1 wie Druckwerkszylinder, Bogentransporttrommeln, Anleger und Ausleger usw. verbunden.

Auf der Welle des Antriebsmotors 2 ist neben der Antriebsscheibe des Keilriementriebes 4 zusätzlich noch eine elektrisch betätigbare Bremse 5 zum mechanischen Bremsen der Druckmaschine 1 und ferner auch ein vorzugsweise als Inkrementalgeber ausgebildeter Drehzahlgeber 6 angeordnet. Der dem Antriebsmotor 2 zugeordnete Drehzahlgeber 6 kann entsprechend der geforderten Genauigkeit der erfindungsgemäß vorgesehenen Antriebsüberwachung auch als Tachogenerator ausgebildet sein.

Dem als Gleichstrommotor ausgebildeten Antriebsmotor 2 ist ein als netzgeführter Stromrichter ausgebildeter elektrischer Hauptantrieb 3 zugeordnet, der die Bestromung der Feld- und Ankerwicklungen entsprechend vorgegebener Drehzahl-Sollwerte vornimmt. Durch den Hauptantrieb 3 erfolgt insbesondere die Erfassung des vom Drehzahlgeber 6 gelieferten Ist-Drehzahl-Signals zur Regelung des Antriebsmotors 2 entsprechend einem vorgegebenen Soll-Drehzahlwertes. Der Hauptantrieb 3 steht ferner auch mit der elektrisch betätigbaren Bremse des Antriebsmotors 2 in Wirkverbindung, um diese in bestimmten Betriebssituationen einzulegen bzw. zu lüften.

Die Druckmaschine 1 weist einen weiteren Drehzahlgeber 7 auf, der beispielsweise an einer eintourig umlaufenden Welle der Maschine wie beispielsweise dem Plattenzylinder` einer Anlegetrommel oder sonst einem vom Antriebsmotor 2 über den Keilriementrieb 4 getriebenen Maschinenbauteil angebracht ist. Bei dem Drehzahlgeber 7 kann es sich ebenfalls um einen Inkrementalgeber handeln, der eine drehzahlproportionale Impulsfolge an dessen Ausgang bereitstellt. Durch einen solchen Inkrementalgeber können durch eine hier nicht dargestellte Maschinensteuerung drehwinkelabhangig auszulösende Schaltvorgange bewirkt werden. Der in der Druckmaschine 1 vorgesehene Drehzahlgeber 7 kann dabei aber auch als ein sogenannter Absolutwertgeber ausgebildet sein, der parallel bzw. seriell Absolutwinkelwerte bereitstellt. Durch Differenzieren der Ausgangssignale nach der Zeit bzw. durch Auswerten einer entsprechenden Bitfolge (Spur) ist der Drehzahlwert der Druckmaschine 1 digital ermittelbar.

Die erfindungsgemäß ausgebildete Überwachungseinrichtung 8 steht mit den Drehzahlgebern 6, 7 des Antriebsmotors 2 sowie der Druckmaschine 1 in Wirkverbindung. Die als programmierbare Rechner ausgebildete Überwachungseirrichtung 8 bildet nun unter Berücksichtigung des Über- bzw. Untersetzungsverhältnisses der Getriebeglieder zwischen Antriebsmotor 2 und der Druckmaschine 1 das Drehzahlverhältnis $n_D/n_A$ der Ist-Drehzahl $n_A$ des Antriebsmotors 2 sowie der Ist-Drehzahl $n_D$ der Druckmaschine 1. Der Wert $1 - n_D/n_A$ bzw. $(n_A - n_D)/n_A$ stellt somit den Schlupf $\vartheta$ des zwischen Antriebsmotor 2 und Druckmaschine 1 befindlichen Keilriementriebes 4 dar.

Die erfindungsgemäß vorgesehene Überwachungseinrichtung 8 steht ferner noch mit dem elektrischen Hauptantrieb 3 des Antriebsmotors 2 zur Erfassung des Ankerstromes $I_A$ in Wirkverbindung. Dabei ist in der Überwachungseinrichtung 8 ein Kennlinienfeld abgespeichert, wobei die Ordinate durch den Schlupf $\vartheta$ und die Abszisse durch den dem vom Antriebsmotor 2 aufgebrachten Drehmoment proportionalen Motorstrom $I_A$ gebildet ist (Fig. 2). In diesem Kennlinienfeld bzw. in einem entsprechend angelegten Kennlinienspeicher sind die erfassbaren Wertepaare des Motorstromes $I_A$ / Schlupfes $\vartheta$ in drei Bereiche a, b, c eingeteilt. Bei ordnungsgemäßem Maschinenlauf bzw. Betriebszustand des Keilriementriebes 4 liegen die Werte des Schlupfes $\vartheta$ bei verschiedenen Motorströmen $I_A$ im Bereich a und es erfolgt kein Eingriff in die Maschinensteuerung bzw. eine Fehleranzeige am Maschinenleitstand.

Werden durch die erfindungsgemäße Überwachungseinrichtung 8 Werte des Schlupfes $\vartheta$ in einem noch tolerierbaren Vorwarnbereich b oder oberhalb davon im Bereich c festgestellt, so erfolgt die Ausgabe einer Vorwarnung bzw. das Sperren des Antriebes gegen ein Anlaufen, jeweils in Verbindung mit einer Fehlermeldung . Dazu steht die Überwachungseinrichtung 8 mit einem Leitstand 9 in Verbindung.

Erfindungsgemäß ist weiterbildend vorgesehen, daß das Erfassen der einem ordnungsgemäßen Maschinenlauf entsprechenden Werte des Schlupfes $\vartheta$ nach der Inbetriebnahme der Maschine oder einer den Keilriementrieb betreffenden Wartungsarbeit selbstlernend durchgeführt wird. Dies kann bevorzugt dadurch erfolgen, daß nach einer korrekt ausgeführten Einstellung der Riemenspannung der Hauptantrieb 3 vorgegebene, gespeicherte Drehzahlrampen und insbesondere auch Bremsvorgänge an der Stromgrenze über den Antriebsmotor 2 ausführt und die Überwachungseinrichtung 8 die ermittelten Werte des Schlupfes $\vartheta$ in Verbindung mit den Werten des Motorstromes $I_A$ nach zusätzlicher Quittierung durch autorisiertes Bedienpersonal als ordnungsgemäß abspeichert.

Bezugszeichenliste

| 1 | Druckmaschine |
|---|---|
| 2 | Antriebsmotor |
| 3 | Hauptantrieb |
| 4 | Keilriementrieb |
| 5 | Bremse |
| 6 | Drehzahlgeber (Antriebsmotor 2) |
| 7 | Drehzahlgeber (Druckmaschine 1) |
| 8 | Überwachungseinrichtung |
| 9 | Leitstand |
| $n_A$ | Drehzahl (Antriebsmotor 2) |
| $n_D$ | Drehzahl (Druckmaschine 1) |
| $I_A$ | Ankerstrom (Antriebsmotor 2 bzw. Hauptantrieb 3) |

Patentansprüche

1. Überwachungseinrichtung für den Antrieb einer Druckmaschine, mit einem vorzugsweise als Gleichstrommotor mit zugeordnetem netzgeführten Stromrichter ausgebildeten Antriebsmotor, wobei der Überwachungseinrichtung Drehzahlsignale $n_A$ des Antriebsmotors und eines vom Antriebsmotor angetriebenen Teils der Druckmaschine $n_D$ zur Bildung eines Drehzahlverhältnisses zuführbar sind **dadurch gekennzeichnet,** daß durch die Überwachungseinrichtung (8) aus dem Drehzahlverhaltnis $n_D/n_A$ der Schlupf $\vartheta = 1 - n_D/n_A$ im Antriebssystem ermittelbar sowie das vom Antriebsmotor aufgebrachte Drehmoment erfaßbar ist, daß Wertepaare der Größen Drehmoment / Schlupf abgespeichert gegenüberstellbar sind, und daß die Überwachungseinrichtung (8) bei Abweichungen der aktuellen Wertepaare von gespeicherten Grenzwerten antriebsbeeinflussende Steuerschritte und/oder Fehlersignale auslösbar sind.

2. Überwachungseinrichtung nach Anspruch 1, **dadurch gekennzeichnet,** daß zwischen Antriebsmotor (2) und Druckmaschine (1) ein Keilriementrieb (4) angeordnet ist.

3. Überwachungseinrichtung nach Anspruch 1 oder 2, **dadurch gekennzeichnet,** daß zwischen Antriebsmotor (2) und Druckmaschine (1) eine reibschlüssig wirkende Kupplung angeordnet ist.

4. Überwachungseinrichtung nach Anspruch 1, **dadurch gekennzeichnet,** daß bei Ausbildung des Antriebsmotors (2) als Gleichstrommotor der Überwachungseinrichtung (8) der Ankerstrom ($I_A$) des Antriebsmotors (2) zuführbar ist.

5. Überwachungseinrichtung nach einem der vorhergehenden Ansprüche, **dadurch gekennzeichnet,** daß zur selbstlernenden Ermittlung der zulässigen Höchstwerte des Schlupfes $\vartheta$ durch die Überwachungseinrichtung (8) dem in dem Antriebsmotor (2) zugeordneten Hauptantrieb (3) Signale zum Durchfahren vorgegebener Drehzahlrampen zuführbar sind.

**Claims**

1. Monitoring device for the drive of a printing press with a drive motor preferably constructed as a direct current motor with mains controlled rectifier fitted thereto, wherein rotational speed signals $n_A$ of the drive motor and of a part of the printing press driven by the drive motor $n_D$ can be fed to the monitoring device for the formation of a rotational speed ratio, characterised in that by means of the monitoring device (8) from the rotational speed ratio $n_D/n_A$, the slip $\vartheta = 1 - n_D/n_A$ in the drive system can be determined as well as the rotational moment applied by the drive motor being detectable, that pairs of values of the quantities rotational moment/slip can be stored relative to one another and that the monitoring device (8) on deviation of the actual pairs of values from stored boundary values can trigger control steps and/or error signals influencing the drive.

2. Monitoring device according to Claim 1, characterised in that between drive motor (2) and printing press (1), there is arranged a V-belt drive (4).

3. Monitoring device according to Claim 1 or 2, characterised in that between drive motor (2) and printing press (1) is arranged a friction operating clutch.

4. Monitoring device according to Claim 1, characterised in that with the construction of the drive motor (2) as a direct current motor, the armature current ($I_A$) of the drive motor (2) can be fed to the monitoring device (8).

5. Monitoring device according to one of the preceding Claims, characterised in that for the self-learning determination of the permissible highest values of the slip $\vartheta$ by means of the monitoring device (8), signals for carrying out predetermined rotational speed ramps can be fed to the main drive (3) fitted to the drive motor (2).

**Revendications**

1. Dispositif de surveillance pour l'entraînement d'une machine d'impression, comportant un moteur d'entraînement réalisé avantageusement comme moteur à courant continu comportant un convertisseur associé et commuté par le réseau, des signaux de vitesses de rotation $n_A$ du moteur d'entraînement et d'une partie, entraînée par le moteur d'entraînement, de la machine d'impression $n_D$ pouvant être transmis au dispositif de surveillance pour former un rapport de vitesses de rotation,
caractérisé en ce que, grâce au dispositif de surveillance (8), à partir du rapport de vitesses de rotation $n_D/n_A$, le patinage $\theta = 1 - n_D/n_A$ peut être déterminé dans le système d'entraînement, et le couple appliqué par le moteur d'entraînement peut être détecté, en ce que des paires des valeurs couple/patinage sont mémorisées en pouvant être réglées les unes par rapport aux autres, et en ce que le système de surveillance (8), dans le cas d'écarts des paires réelles de valeurs limites mémorisées, peut déclencher des signaux d'erreur et/ou des étapes de commande influençant l'entraînement.

2. Dispositif de surveillance selon la revendication 1, caractérisé en ce qu'une transmission par courroie trapézoïdale (4) est agencée entre le moteur d'entraînement (2) et la machine d'impression (1).

3. Dispositif de surveillance selon la revendication 1 ou 2,
caractérisé en ce qu'un embrayage agissant par friction est agencé entre le moteur d'entraînement (2) et la machine d'impression (1).

4. Dispositif de surveillance selon la revendication 1, caractérisé en ce que, lorsque le moteur d'entraînement (2) est réalisé comme moteur à courant continu, le courant d'induit ($I_A$) du moteur d'entraînement (2) peut être transmis au dispositif de surveillance (8).

5. Dispositif de surveillance selon une des revendications précédentes,
caractérisé en ce que, pour la détection auto-adaptative des valeurs les plus élevées autorisées du patinage $\theta$ par le dispositif de surveillance (8), des signaux pour balayer des zones de vitesses de rotation prédéfinies peuvent être transmis à l'entraînement principal (3) associé au moteur d'entraînement (2).

Fig. 1

Fig. 2